# EUROPEAN PATENT APPLICATION

(11) **EP 3 965 522 A1**
(43) Date of publication of application: **09.03.2022**
(21) Application number: 19926980.4
(22) Date of filing: 02.05.2019
(51) Int. Cl.: H04W 76/10, H04W 4/42, H04W 4/44

(54) **USER EQUIPMENT AND COMMUNICATION METHOD**

(71) Applicant: NTT DOCOMO, INC., Chiyoda-Ku Tokyo 100-6150 (JP)
(72) Inventor: SANO, Yousuke, Tokyo 100-6150 (JP); TAKADA, Takuma, Tokyo 100-6150 (JP)
(74) Representative: Hoffmann Eitle
(86) International application number: PCT/JP2019/018196
(87) International publication number: WO 2020/222285

(57) **Abstract**

A user equipment includes a reception unit that receives a signal for enabling a receive processing function supporting a radio propagation environment of a High Speed Train (HST)-Single Frequency Network (SFN); and a control unit that enables the receive processing function in response to receiving the signal for enabling the receive processing function supporting the radio propagation environment of the HST-SFN.

## Description

### TECHNICAL FIELD

The present invention relates to user equipment and a communication method in a radio communication system.

### BACKGROUND ART

Regarding a High Speed Train (HST) scenario that mainly assumes a case of boarding a train or the like that moves at high speed, such as a Shinkansen, a technical specification document on reception capability of a Release 16 LTE terminal is currently developed in 3GPP. In the development of a technical specification document of LTE Release 16, further enhancement on the technical specification document on the Release 14 HST has been discussed. Specifically, it has been studied to add a requirement assuming a carrier aggregation (CA) operation, in addition to the assumption of a single carrier operation (operations in non-carrier aggregation) for the HST of the Releases 8 and 14. Furthermore, a requirement has been developed to enhance a moving speed of a user equipment 10 in HST-Single Frequency Network (SFN) (and single tap HST) to approximately 500 km/h. Note that the above-described moving speed is a target value assuming, for example, a 2.7 GHz band. If a different frequency band is assumed, the moving speed can be a different value.

In the development of a technical specification document of New Radio (NR), a technical specification document regarding the High Speed Train has been developed. Specifically, in Release 15 NR, a technical specification document on a requirement on capability has been developed that assumes high speed train movement (single tap HST) at approximately 300 km/h, which is equivalent to that of LTE.

### Related Art Document

### [Non-Patent Document]

Non-Patent Document 1: NTT DOCOMO Technical Journal, Vol. 25 No.3 (Oct 2017), p.59-P64
Non-Patent Document 2: 3GPP TS 36.101 V8.29.0 (2017-12)
Non-Patent Document 3: 3GPP TS 36.211 V14.10.0(2019-03)
Non-Patent Document 4: 3GPP TS 36.133 V14.11.0(2019-03)
Non-Patent Document 5: 3GPP TS 36.331 V14.10.0(2019-03)
Non-Patent Document 6: 3GPP TS 36.101 V14.11.0(2019-03)
Non-Patent Document 7: 3GPP TS 36.306 V14.10.0(2019-03)

### SUMMARY OF THE INVENTION

### [PROBLEM TO BE SOLVED BY THE INVENTION]

It is described in Non-Patent Document 5 that, when highSpeedEnhancedDemodulationFlag is included in HighSpeedConfig-14 in RadioResourceConfigCommon Information Element (IE), a user equipment 10 is to apply an advanced receiver in an SFN scenario, which is specified in Non-Patent Document 6. However, the requirement specified in the Release 14 HST that assumes the HST-SFN scenario assumes a case in which a traveling speed of the user equipment 10 is approximately 350 km/h. Currently, in 3GPP, functional enhancement is studied for a case in which the traveling speed of the user equipment 10 is approximately 500 km/h.

There is a need for a technique to enable/disable a channel estimation function supporting a radio propagation environment of a High Speed Train (HST)-Single Frequency Network (SFN) when a traveling speed of a user equipment is approximately 500 km/h.

### [MEANS FOR SOLVING THE PROBLEM]

According to an aspect of the present invention, there is provided a user equipment including a reception unit that receives a signal for enabling a receive processing function supporting a radio propagation environment of a High Speed Train (HST)-Single Frequency Network (SFN); and a control unit that enables the receive processing function in response to receiving the signal for enabling the receive processing function supporting the radio propagation environment of the HST-SFN.

### [ADVANTAGE OF THE INVENTION]

According to an embodiment, a channel estimation function supporting a radio propagation environment of a High Speed Train (HST)-Single Frequency Network (SFN) can be enabled/disabled in a case in which a traveling speed of a user equipment is approximately 500 km/h.

### BRIEF DESCRIPTION OF DRAWINGS

FIG. 1 is a configuration diagram of a communication system according to an embodiment.
FIG. 2 is a diagram for illustrating a fast moving environment of a user equipment envisaged in an SFN scenario.
FIG. 3 is a diagram for illustrating the exemplary trajectory of a Doppler frequency shift in a single tap HST.
FIG. 4 is a diagram illustrating a modified example of the RadioResourceConfigCommon IE for applying a function for shortening UE measurement time to a SCell.
FIG. 5 is a diagram illustrating a modified example of the RadioResourceConfigCommon IE for enabling a function for shortening measurement time, a function for optimizing a Radio Link Monitoring function and a function for autonomously adjusting the transmission timing in a case where a traveling speed of the user equipment is approximately 500 km/h.
FIG. 6 is a diagram illustrating a modified example of the RadioResourceConfigCommon IE for enabling an advanced channel estimation function in an HST-SFN scenario in a case where the traveling speed of the user equipment is about 500 km/h.
FIG. 7 is a diagram illustrating an example of a functional configuration of a user equipment.
FIG. 8 is a diagram illustrating an example of the functional configuration of a base station.
FIG. 9 is a diagram illustrating an example of the hardware configuration of the user equipment and the base station.

### [EMBODIMENTS OF THE INVENTION]

Hereinafter, embodiments of the present invention are described with reference to the drawings. The embodiments described below are merely examples, and the embodiments to which the present invention is applied are not limited to the following embodiments.

The radio communication system according to the following embodiments is basically assumed to be NR, but this is an example, and the radio communication system according to the embodiments may conform to a radio communication system other than NR (e.g., LTE) in whole or in part.

### (Overall System Configuration)

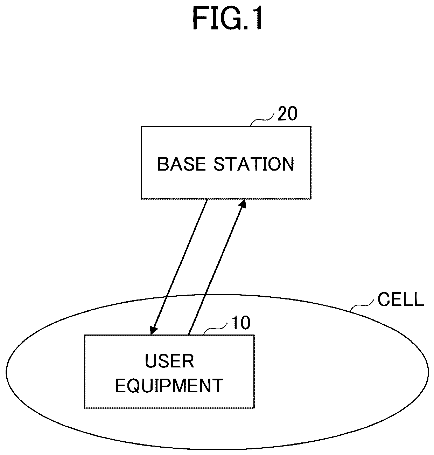

FIG. 1 shows a configuration diagram of a radio communication system according to the present embodiment. The radio communication system according to the embodiments includes a user equipment 10 and a base station 20 as illustrated in FIG. 1. In FIG. 1, one user equipment 10 and one base station 20 are illustrated. This is an example, and there may be a plurality of units of the user equipment 10 and a plurality of the base stations 20.

The user equipment 10 is a communication device having a radio communication function, such as a smartphone, a cellular phone, a tablet, a wearable terminal, and a communication module for M2M (Machine-to-Machine). The user equipment 10 wirelessly connects to the base station 20 and utilizes various communication services provided by the radio communication system. The base station 20 is a communication device that provides one or more cells and wirelessly communicates with the user equipment 10. Note that the base station 20 may be formed of a Base Band Unit (BBU) and one or more Remote Radio Heads (RRHs). Furthermore, the user equipment 10 may be called a UE, and the base station 20 may be called a gNB. Alternatively, the base station 20 may have a CU-DU configuration formed of an aggregated base station (CU: Central Unit) and a remote station (DU: Distributed Unit).

In the embodiments, the duplex method may be a Time Division Duplex (TDD) method or a Frequency Division Duplex (FDD) method. Furthermore, the embodiments may be applied to half-duplex communication, or full-duplex communication.

### (Overview of SFN scenario)

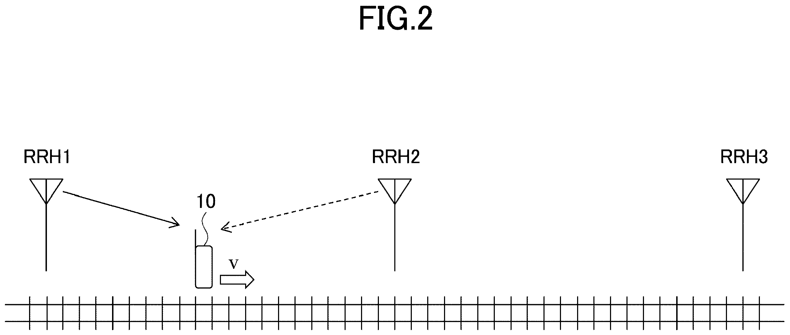

A Single Frequency Network (SFN) scenario is described in detail in Non-Patent Document 1. In FIG. 2, a fast moving environment of the user equipment 10 assumed in the SFN scenario is illustrated. As illustrated in FIG. 2, the SFN scenario is a scenario in the case where one area is formed of transmissions and receptions of the same signals on the same frequency by Remote Radio Heads (RRHs) successively located along a railway line.

In the SFN scenario, since the same signals are transmitted from the respective RRHs, the signals from adjacent RRHs do not cause interference. Also, as illustrated in FIG. 2, since the cell is unchanged during movement of the user equipment 10 from the area of RRH1 to the area of RRH2, no handover operation occurs. Accordingly, the SFN scenario is suitable for the fast moving environment.

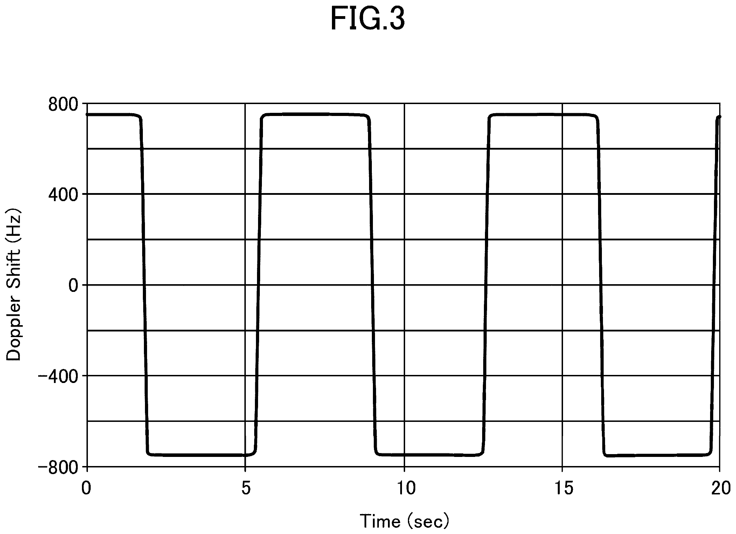

In the SFN scenario, the user equipment 10 receives the effect of positive and negative Doppler frequency shifts by a signal traveling from an RRH positioned forward of the user equipment 10 and a signal traveling from an RRH positioned behind the user equipment 10. FIG. 3 is a diagram illustrating an exemplary trajectory of the Doppler frequency shift in a single tap HST of Release 8 described in B.3 in Annex B of Non-Patent Document 2. In the single tap HST described in B.3 in Annex B of Non-Patent Document 2, a one-tap fading free propagation channel is assumed. In the single tap HST, only a propagation path for a radio signal having the highest signal strength is considered. In FIG. 3, it is illustrated that the influence of the positive Doppler frequency shift is added to the frequency of the signal traveling from the forward positioned RRH with respect to the user equipment 10, and the influence of the negative Doppler frequency shift is added to the frequency of the signal traveling from the backward positioned RRH with respect to the user equipment 10. The Doppler frequency shift increases in the high-speed movement. At the timing where the fast moving user equipment 10 switches between connecting RRHs, that is, near the middle of the two RRHs, the signal traveling from the forward positioned RRH, which causes the influence of the positive Doppler frequency shift having a larger absolute value, and the signal traveling from the backward positioned RRH, which causes the influence of the negative Doppler frequency shift having a larger absolute value, arrive at the user equipment 10 at the almost same timing. The user equipment 10 is to switch the RRHs while receiving these two signals simultaneously. However, it is difficult to follow the rapid change in the Doppler frequency shift from the negative to the positive, and it is pointed out that communication quality may degrade(Non-Patent Document 1).

In Release 14 of 3GPP, a requirement assuming approximately 350 km/h is added to the single tap HST. Furthermore, in order to reduce the frequency of handover occasions during fast movement, a requirement focusing on a scenario using the same cell ID among neighboring cells (HST (High Speed Train)-SFN) is described in the technical specification document.

Currently, in 3GPP, a technical specification document for Release 16 LTE has been developed for the High Speed Train. In the development of the Release 16 LTE technical specification document, further enhancement on the Release 14 HST technical specification document has been discussed. Specifically, it has been studied to add a requirement assuming a carrier aggregation (CA) operation, in addition to the assumption of a single carrier operation (operations in non-carrier aggregation) for the HST of the Releases 8 and 14. Furthermore, a technical specification document has been developed to enhance a moving speed of the user equipment 10 in HST-SFN (and single tap HST) to approximately 500 km/h. The technical specification document is to be completed in December 2019.

For the New Radio (NR), a technical specification document on the High Speed Train has also been developed. Specifically, in the Release 15 NR, a technical specification document on a requirement on capability has been developed, which assumes fast movement by trains (single tap HST) at approximately 300 km/h, similar to the LTE. In the Release 16 NR, a technical specification document on the HST-SFN similar to that of the Release 14 LTE is to be developed.

### (Details of the HST specification)

In the technical specification document of Release 8 LTE (Non-Patent Document 2), only a requirement on demodulation capability of the user equipment 10 (the requirement on UE demodulation) is specified. Specifically, a requirement for the case where a propagation condition is set to the HST is described as Test number 4 of Table 8.2.2.1.1-2 of

### Non-Patent Document 2.

Furthermore, in Non-Patent Document 3, which is a Release 14 technical specification document, a restricted set type B is specified, which is an enhancement of a Random Access Channel preamble for supporting a speed higher than or equal to 350 km/h (theoretically, approximately 500 km/h at maximum).

Furthermore, in Non-Patent Document 4, as the Release 14 technical specification document, it is described that, if a highSpeedEnhancedMeasFlag is configured in a HighSpeedConfig-14 in a RadioResourceConfigCommon Information Element (IE), the enhanced measurement is applied only to a primary component carrier and is not applied to measurement of a secondary component carrier of an activated secondary cell (SCell).

Furthermore, in Non-Patent Document 5, as the Release 14 technical specification document, it is described that a highSpeedEnhancedMeasFlag and a highSpeedEnhancedDemodulationFlag may be configured as parameters of a HighSpeedConfig-14 in the RadioResourceConfigCommon Information Element (IE). Here, if the highSpeedEnhancedMeasFlag is included in the HighSpeedConfig-14, the user equipment 10 is to apply high speed measurement enhancements described in Non-Patent Document 4.

Furthermore, in Non-Patent Document 6, as the Release 14 technical specification document, a test is specified for validating the capability of the user equipment 10 in the HST-SFN scenario specified in B.3A, when the highSpeedEnhancedDemodulationFlag is received. Here, in Non-Patent Document 5, it is described that, if the highSpeedEnhancedDemodulationFlag is included in a HighSpeedConfig-14 in the RadioResourceConfigCommon Information Element (IE), the user equipment 10 is to apply an advanced receiver in the SFN scenario specified in Non-Patent Document 6. For example, it is assumed that the user equipment 10 is to apply a receiver that can receive a signal traveling from a forward positioned RRH and a signal traveling from an RRH positioned behind the user equipment 10 that is caused by the effect of positive and negative Doppler frequency shifts, for example. In other words, an ON/OFF function for advanced channel estimation in the HST-SFN scenario is specified.

Furthermore, in Non-Patent Document 7 as the Release 14 technical specification document, a measurementEnhancements-r14, a demodulationEnhancements-r14 and a prach-Enhancements-r14 are specified, as E-UTRA UE Radio Access Capability Parameters. The measurementEnhamcements-r14 specifies whether the user equipment 10 supports enhanced measurement in the high speed scenario specified in Non-Patent Document 4. In other words, the measurementEnhancements-r14 specifies whether to apply a function for shortening UE measurement time when the state of the user equipment 10 is Discontinuous Reception (DRX) mode. The demodulationEnhancements-r14 specifies whether the user equipment 10 supports the advanced receiver in the SFN scenario specified in Non-Patent Document 6. The prach-Enhancements-r14 specifies whether the user equipment 10 supports a random access preamble generated from restricted set type B in the high speed scenario specified in Non-Patent Document 3.

In the case where the user equipment 10 is moving at a high speed and the state of the user equipment 10 is the Discontinuous Reception (DRX) mode, during the CA, the function for shortening the UE measurement time can be applied only to a primary cell (PCell) and cannot be applied to a secondary cell (SCell). This is because no Radio Resource Control (RRC) signaling is specified for applying the function for shortening the UE measurement time to the SCell. Accordingly, in the scenario for the HST + CA, if the SCell is in the DRX mode, the function for shortening the UE measurement time cannot be applied to the SCell, and the measurement accuracy may be degraded.

As a solution to solve the above-described problem, a Radio Resource Control (RRC) signaling may be added for applying the function for shortening the UE measurement time to the SCell.

Furthermore, a UE capability signaling may be added so as to determine whether the user equipment 10 can apply the function for shortening the UE measurement time to the SCell.

Note that the function for shortening the UE measurement time may be applied to a Primary SCell (PSCell) during dual connectivity, such as E-UTRAN New Radio-Dual Connectivity (EN-DC).

Note that, if, in the user equipment that can apply the function for shortening the UE measurement time with respect to the SCell, the same DRX cycle time is configured for the PCell and the SCell, and, if, for example, the reduction of the UE measurement time is configured for the PCell of the user equipment by the highSpeedEnhancedMeasFlag, the user equipment may apply the configuration of the PCell to the SCell. Specifically, it may be deemed that the UE measurement time configured for the SCell is the same as that of the PCell.

Furthermore, during dual connectivity, if, for the user equipment that can apply the function for shortening the UE measurement time to the PSCell, the same DRX cycle time is configured for the PCell and the PSCell, and, for example, the reduction of the UE measurement time is configured in the user equipment with respect to the PCell by the highSpeedEnhancedMeasFlag, the user equipment may apply the configuration of the PCell to the PSCell. Furthermore, the configuration of the PCell may be applied to all the cells (the PSCell and the SCell), or the configuration of the primary cell (the PCell or the PSCell) in each cell group may be applied to the SCell in each cell group.

Furthermore, if different DRX cycle times are configured for the PCell and the SCell (or the PSCell), the configuration for the cell having the shorter or longer DRX cycle time may be applied to all the cells. As a result, the UE measurement time can be shortened for all or a part of the cells during the CA or the dual connectivity only by configuring the highSpeedEnhancedMeasFlag for the primary cell, and, thus, signaling overhead can be reduced.

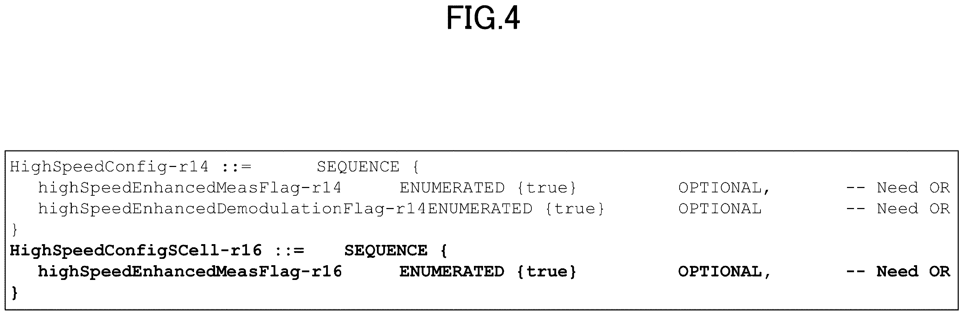

FIG. 4 is a diagram illustrating a modified example of the RadioResourceConfigCommon IE for applying the function for shortening the UE measurement time to the SCell. In the modified example of the RadioResourceConfigCommon IE illustrated in FIG. 4, a HighSpeedConfigSCell-r14 is included, and a HighSpeedConfigSCell-r16 is further added. Here, the HighSpeedConfigSCell-r14 is an IE that can be transmitted to only the PCell and cannot be transmitted to the SCell. Accordingly, a new IE HighSpeedConfigSCell-R16 that can be transmitted to the SCell is defined, and if a highSpeedEnhancedMeasFlag-r16 included in the HighSpeedConfigSCell-R16 is set to true, the function for shortening the UE measurement time may be applied to the SCell.

In the case where a user carrying the user equipment 10 travels at a high-speed on a high-speed train and the CA is configured for the user equipment 10, if both the PCell and the SCell become the DRX mode and the function for shortening the UE measurement time is applied only to the PCell, and if the function for shortening the UE measurement time is not applied to the SCell, the measurement accuracy for the SCell may become lower than the PCell. By adding the above-described RRC signaling, the measurement accuracy for the SCell can be enhanced. As described above, since the measurement accuracy for the PCell and the SCell can be enhanced, the user equipment 10 can perform handover to a more proper cell.

In the HST up to Release 14, approximately 350 km/h is assumed, as the traveling speed of the trains. In contrast, in 3GPP, the development of a technical specification document has been discussed for the case where the maximum speed of the trains is 500 km/h. In this regard, not only for shortening the UE measurement time (referred to as measurement time, hereinafter) in the DRX mode, but also enhancement of the Radio Link Monitoring function and enhancement of the requirement on the UE Tx autonomous timing have been discussed. For the Radio Link Monitoring, if, during high speed movement of the user equipment 10, the quality of a radio link is determined too frequently, it is possible that a case occurs in which, when the channel quality falls instantaneously due to the high speed movement, the channel quality may recover at the next instance, even if the Radio Link Failure occurs. It is necessary to avoid such an unnecessary determination of the Radio Link Failure. Furthermore, for the UE Tx autonomous timing, an adjustable value of the user equipment 10 is specified under assumption of 350 km/h. Since the adjustable value is too small for the case of 500 km/h, it may be impossible to address variations of the propagation environment caused by the high speed movement.

An RRC signaling may be added for enabling, in the case where the traveling speed of the user equipment 10 is approximately 500 km/h, the function for shortening the measurement time at the user equipment 10, a function for optimizing the Radio Link Monitoring function, and a function for autonomously adjusting the transmission timing of the user equipment 10. Here, the function for optimizing the Radio Link Monitoring function may be a function for applying averaged quality, as the quality of a radio link monitored by the user equipment 10, for example. Furthermore, for example, as for a timing advance value received in the past by the user equipment from the base station, the function for autonomously adjusting the transmission timing of the user equipment 10 may be a function for adding, to the timing advance value received from the base station 20, an offset value corresponding to a difference between a distance from the base station 20 to the user equipment 10 at the time point of receiving the timing advance value and a current distance from the base station 20 to the user equipment 10.

Furthermore, in the above-described case where the traveling speed of the user equipment 10 is approximately 500 km/h, a UE capability may be introduced, which is for determining whether the user equipment 10 can apply the function for shortening the measurement time at the user equipment 10, the function for optimizing the Radio Link Monitoring function, and the function for autonomously adjusting the transmission timing of the user equipment 10.

The above-described RRC signaling and UE capability may be separately signaled for the functions. Alternatively, the above-described RRC signaling and UE capability may be collectively signaled for the functions. Furthermore, the above-described RRC signaling and UE capability may be applied to the SCell in the CA or the DC. Furthermore, the above-described RRC signaling and UE capability may be applied to the PSCell in the DC.

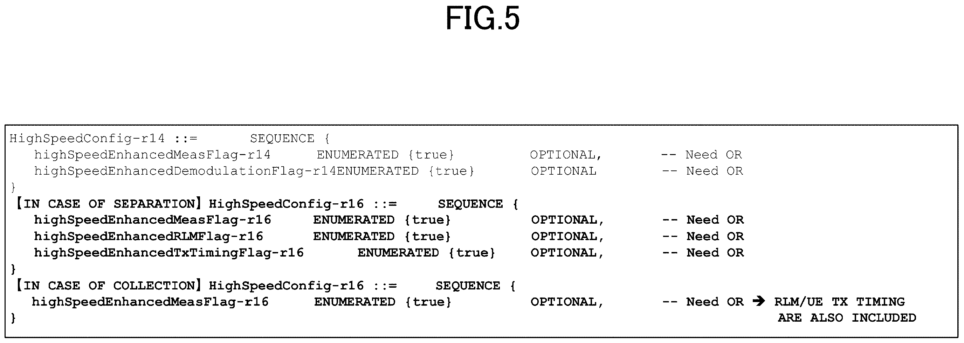

FIG. 5 is a diagram illustrating a modified example of the RadioResourceConfigCommon IE for enabling the function for shortening the measurement time at the user equipment 10, the function for optimizing the Radio Link Monitoring function, and the function for autonomously adjusting the transmission timing of the user equipment 10 in the case where the traveling speed of the user equipment 10 is approximately 500 km/h.

As illustrated in FIG. 5, the HighSpeedConfig-r16 is added to the HighSpeedConfig-r14, and a highSpeedEnhancedMeasFlag-r16, a highSpeedEnhanced RLMFlag-r16, and a highSpeedEnhancedTxTimingFlag-r16 are included in the HighSpeedConfig-r16. In the example illustrated in FIG. 5, if the highSpeedEnhancedMeasFlag-r16 is set to true, the function for shortening the measurement time at the user equipment 10 may be enabled. If the highSpeedEnhanced RLMFlag-r16 is set to true, the function for optimizing the Radio Link Monitoring function may be enabled. In addition, if the highSpeedEnhancedTxTimingFlag-r16 is set to true, the function for autonomously adjusting the transmission timing of the user equipment 10 may be enabled. The function for shortening the measurement time at the user equipment 10, the function for optimizing the Radio Link Monitoring function, and the function for autonomously adjusting the transmission timing of the user equipment 10 can be separately configured.

Alternatively, as illustrated in FIG. 5, if the highSpeedEnhancedMeasFlag-r16 is included in the HighSpeedConfig-r16 and the highSpeedEnhancedMeasFlag-r16 is set to true, the function for shortening the measurement time at the user equipment 10, the function for optimizing the Radio Link Monitoring function, and the function for autonomously adjusting the transmission timing of the user equipment 10 may be collectively enabled.

By introducing the above-described RadioResourceConfigCommon IE, the function for shortening the measurement time at the user equipment 10, the function for optimizing the Radio Link Monitoring function, and the function for autonomously adjusting the transmission timing of the user equipment 10 can be applied to the case where the traveling speed of the user equipment 10 is approximately 500 km/h.

### (Problem to be solved)

In Non-Patent Document 5, it is described that, if the highSpeedEnhancedDemodulationFlag is included in the HighSpeedConfig-14 in the RadioResourceConfigCommon Information Element (IE), the user equipment 10 is to apply an advanced receiver in the SFN scenario specified in Non-Patent Document 6. For example, suppose that the user equipment 10 is caused by the effect of the positive and negative Doppler frequency shifts, as the user equipment 10 moves at a high speed. In this case, the user equipment 10 is assumed to apply a receiver that receives at least two signals including a signal traveling from an RRH positioned forward of the user equipment 10 and a signal traveling from an RRH positioned behind the user equipment 10 and that changes, while receiving the at least two signals simultaneously, the RRH in accordance with the variation in reception levels. Namely, in Non-Patent Document 5, an ON/OFF function for an advanced channel estimation is specified in consideration of the effect of the positive and negative Doppler frequency shifts in the HST-SFN scenario. However, as for the requirement specified for the Release 14 HST that assumes the HST-SFN scenario, a case is assumed in which the traveling speed of the user equipment 10 is approximately 350 km/h. Currently, in 3GPP, it has been studied to enhance the function for a case in which the traveling speed of the user equipment is approximately 500 km/h.

### (Solution to the problem)

In the case where the traveling speed of the user equipment 10 is approximately 500 km/h, an RRC signaling may be added for turning the advanced channel estimation function to ON/OFF in the user equipment 10 in the HST-SFN scenario. Here, the advanced channel estimation function in the HST-SFN scenario may be a function for receiving at least two signals including a signal traveling from an RRH positioned forward of the user equipment 10 and a signal traveling from an RRH positioned behind the user equipment 10 and for changing, while receiving the at least two signals simultaneously, the RRH in accordance with the variation in reception levels.

Furthermore, a UE capability may be introduced that allows the user equipment 10 to indicate whether the advanced channel estimation function in the HST-SFN scenario can be applied. Furthermore, the user equipment provided with the UE capability may be deemed to have the UE capability of the existing advanced channel estimation, assuming 350 km/h.

Furthermore, the above-described RRC signaling and UE capability are not limited to only the PCell. They may be applied to the SCell in the CA and the PSCell in LTE-LTE dual connectivity, NR-NR dual connectivity, or LTE-NR dual connectivity (or triple connectivity or the like).

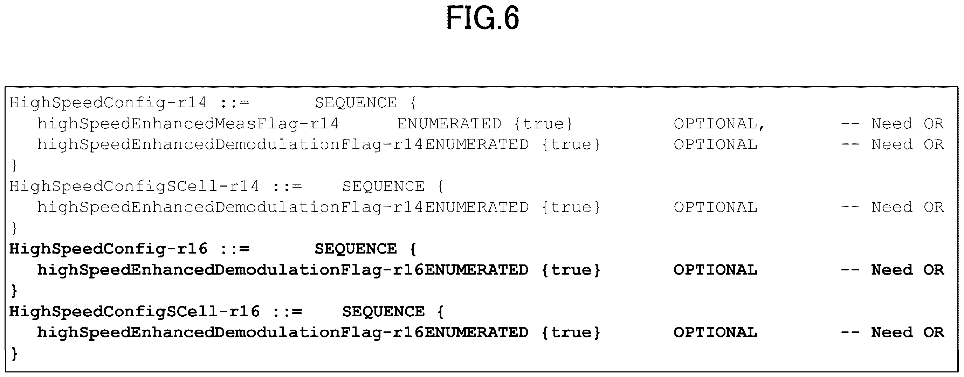

FIG. 6 is a diagram for illustrating a modified example of the RadioResourceConfigCommon IE for enabling the advanced channel estimation function in the HST-SFN scenario at the user equipment 10 in the case where the traveling speed of the user equipment 10 is approximately 500 km/h. As illustrated in FIG. 6, if the highSpeedEnhancedDemodulationFlag-r16 included in the HighSpeedConfig-r16 is set to true, the advanced channel estimation function is set to ON for the PCell. Furthermore, if the highSpeedEnhancedDemodulationFlag-r16 included in a HighSpeedConfigSCell-r16 is set to true, the advanced channel estimation function is set to ON for the SCell.

### (Effects)

By introducing the above-described RadioResourceConfigCommon IE, the user equipment 10 can apply the advanced channel estimation function in the HST-SFN scenario, even if the traveling speed of the user equipment 10 is approximately 500 km/h.

### (Device Configurations)

Next, examples of functional configurations of the user equipment 10 and the base station 20 for executing the above-described processing and operation are described. The user equipment 10 and the base station 20 include all the functions for executing the above-described embodiments. However, each of user equipment 10 and the base station 20 may be provided with only some functions described in the embodiments. Note that the user equipment 10 and the base station 20 may be collectively referred to as a communication apparatus.

Note that, in the following, the receiving capability, such as that of the channel estimation, is described in terms of the traveling speed of the user equipment 10. However, the traveling speed of the user equipment 10 is not the only one factor to be considered. As described above, for a different frequency band, a different target value of the traveling speed is applied to the following description. The effect of the Doppler frequency shift can be described in terms of the frequency and the traveling speed. Namely, the following description regarding the traveling speed can be replaced with the Doppler frequency shift and/or described in terms of the Doppler frequency shift.

### <User Equipment>

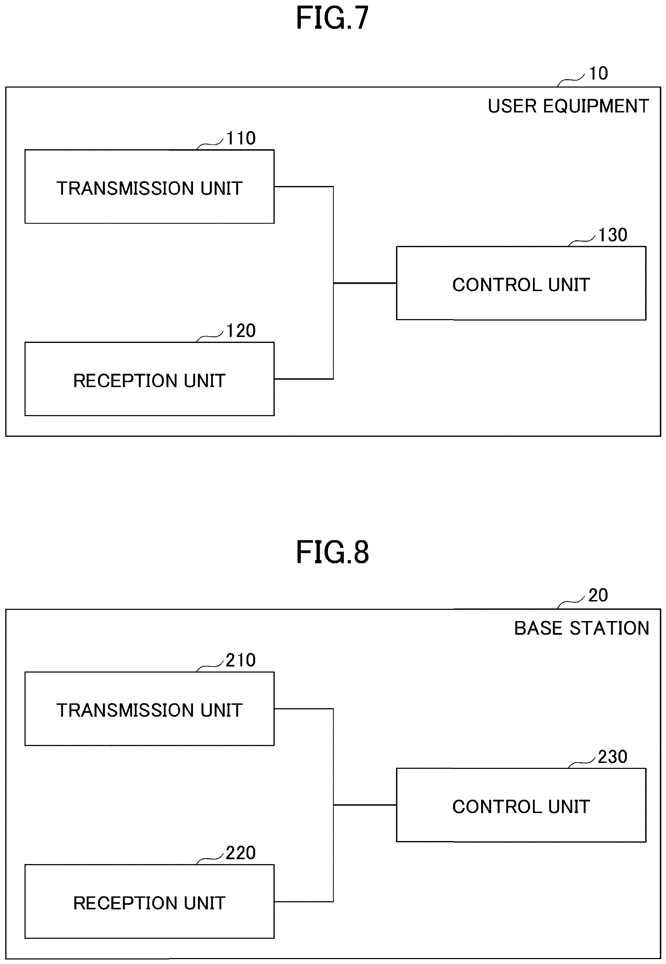

FIG. 7 is a diagram illustrating an example of a functional configuration of the user equipment 10. As illustrated in FIG. 7, the user equipment 10 includes a transmission unit 110, a reception unit 120, and a control unit 130. The functional configuration illustrated in FIG. 7 is an example. A functional division and the names of the functional units may be any division and the names provided that the operation according to the embodiments can be executed. The transmission unit 110 may be referred to as a transmitter, and the reception unit 120 may be referred to as a receiver.

The transmission unit 110 creates transmission from transmission data, and wirelessly transmits the transmission signal. The reception unit 120 wirelessly receives various signals, and obtains a higher layer signal from the received physical layer signal. Furthermore, the reception unit 120 includes a measurement unit that obtains received power or the like by performing a measurement of a received signal.

The control unit 130 controls the user equipment 10. Note that, a function of the control unit 130 related to transmission may be included in the transmission unit 110, and a function of the control unit 130 related to reception may be included in the reception unit 120.

For example, the transmission unit 110 transmits a UE capability signaling for indicating whether the function for shortening the UE measurement time can be applied in the user equipment 10. For example, the reception unit 120 receives an RRC signaling for applying the function for shortening the UE measurement time to the PCell and the SCell. In response to reception of the RRC signaling for applying the function for shortening the UE measurement time to the PCell and the SCell at the reception unit 120, the control unit 130 applies the function for shortening the UE measurement time to the PCell and the SCell.

For example, if the HighSpeedConfigSCell-r14 and the HighSpeedConfigSCell-r16 are included in the RadioResourceConfigCommon IE included in the RRC signaling received by the reception unit 120, and if the highSpeedEnhancedMeasFlag-r14 included in the HighSpeedConfigSCell-r14 is set to true and the highSpeedEnhancedMeasFlag-r16 included in the HighSpeedConfigSCell-r16 is set to true, the control unit 130 may apply the function for shortening the UE measurement time to the PCell and the SCell.

Furthermore, if the traveling speed of the user equipment 10 is approximately 500 km/h, the transmission unit 110 transmits a UE capability signaling indicating whether the function for shortening the measurement time at the user equipment 10, the function for optimizing the Radio Link Monitoring function and the function for autonomously adjusting the transmission timing of the user equipment 10 can be applied to the user equipment 10. The reception unit 120 receives an RRC signaling for enabling the function for shortening the measurement time at the user equipment 10, the function for optimizing the Radio Link Monitoring function and the function for autonomously adjusting the transmission timing of the user equipment 10. In response to reception of the RRC signaling at the reception unit 120 for enabling the function for shortening the measurement time at the user equipment 10, the function for optimizing the Radio Link Monitoring function, and the function for autonomously adjusting the transmission timing of the user equipment 10, the control unit 130 may enable the function for shortening the measurement time at the user equipment 10, the function for optimizing the Radio Link Monitoring function, and the function for autonomously adjusting the transmission timing of the user equipment 10.

For example, if the HighSpeedConfig-r16 is included in the RadioResourceConfigCommon IE in the RRC signaling received by the reception unit 120 and the highSpeedEnhancedMeasFlag-r16 included in the HighSpeedConfig-r16 is set to true, the control unit 130 may enable the function of shortening the measurement time at the user equipment 10. Furthermore, if the HighSpeedConfig-r16 is included in the RadioResourceConfigCommon IE included in the RRC signaling received by the reception unit 120 and the highSpeedEnhanced RLMFlag-r16 included in the HighSpeedConfig-r16 is set to true, the control unit 130 may enable the function for optimizing the Radio Link Monitoring function. Furthermore, if the HighSpeedConfig-r16 is included in the RadioResourceConfigCommon IE included in the RRC signaling received by the reception unit 120 and the highSpeedEnhancedTxTimingFlag-r16 included in the HighSpeedConfig-r16 is set to true, the control unit 130 may enable the function for autonomously adjusting the transmission timing of the user equipment 10.

Alternatively, if the HighSpeedConfig-r16 is included in the RadioResourceConfigCommon IE included in the RRC signaling received by the reception unit 120 and the highSpeedEnhancedMeasFlag-r16 included in the HighSpeedConfig-r16 is set to true, the control unit 130 may collectively enable the function for shortening the measurement time at the user equipment 10, the function for optimizing the Radio Link Monitoring function, and the function for autonomously adjusting the transmission timing of the user equipment 10.

Furthermore, in the case where the traveling speed of the user equipment 10 is approximately 500 km/h, the transmission unit 110 transmits a UE capability signaling for indicating whether the advanced channel estimation in the HST-SFN scenario can be applied to the user equipment 10. The reception unit 120 receives an RRC signaling for turning the advanced channel estimation function in the HST-SFN scenario to ON/OFF in the user equipment 10. In response to reception of the RRC signaling for turning the advanced channel estimation function in the HST-SFN scenario to ON/OFF in the user equipment 10 by the reception unit 120, the control unit 130 turns the advanced channel estimation function in the HST-SFN scenario to ON/OFF in the user equipment 10.

For example, if the HighSpeedConfig-r16 is included in the RadioResourceConfigCommon IE included in the RRC signaling received by the reception unit 120 and the highSpeedEnhancedDemodulationFlag-r16 included in the HighSpeedConfig-r16 is set to true, the control unit 130 may turn the advanced channel estimation function for the PCell to ON. Furthermore, if the highSpeedEnhancedDemodulationFlag-r16 included in the HighSpeedConfigSCell-r16 is set to true, the control unit 130 may turn the advanced channel estimation function for the SCell to ON.

### <Base Station 20>

FIG. 8 is a diagram illustrating an example of a functional configuration of the base station 20. As illustrated in FIG. 8, the base station 20 includes a transmission unit 210, a reception unit 220, and a control unit 230. A functional configuration illustrated in FIG. 8 is an example. A functional division and names of the functional units may be any division and names, provided that the operation according to the embodiments can be executed. Note that, the transmission unit 210 may be referred to as a transmitter, and the reception unit 220 may be referred to as a receiver.

The transmission unit 210 includes a function for generating a signal to be transmitted to the user equipment 10, and wirelessly transmitting the signal. The reception unit 220 includes a function for receiving various signals transmitted from the user equipment 10, and obtaining, for example, information of a higher layer from the received signals. Furthermore, the reception unit 220 includes a measurement unit that obtains received power or the like by measuring a signal received by the reception unit 220. The control unit 230 controls the base station 20. Note that, a function of the control unit 230 related to transmission may be included in the transmission unit 210, and a function of the control unit 230 related to reception may be included in the reception unit 220.

For example, the control unit 230 may generate an RRC message for applying a function for shortening the UE measurement time to a PCell and an SCell, and the transmission unit 210 may transmit RRC signaling including the RRC message to the user equipment 10. Furthermore, when the moving speed of the user equipment 10 is approximately 500 km/h, the control unit 230 may generate an RRC message for enabling a function for shortening the measurement time in the user equipment 10, a function for optimizing a Radio Link Monitoring function, and a function for autonomously adjusting transmission timing from the user equipment 10, and the transmission unit 210 may transmit RRC signaling including the RRC message to the user equipment 10. Furthermore, when the moving speed of the user equipment 10 is approximately 500 km/h, the control unit 230 may generate an RRC message for turning an advanced channel estimation function in an HST-SFN scenario to ON/OFF in the user equipment 10, and the transmission unit 210 may transmit RRC signaling including the RRC message to the user equipment 10.

### (Hardware configuration)

In the block diagrams (FIGs. 7 and 8) used for the description of the embodiments, the blocks of the functional units are illustrated. The functional blocks (configuring units) are implemented by any combination of hardware and/or software. A device of implementing each functional block is not particularly limited. In other words, each functional block may be implemented by one device in which a plurality of elements is physically and/or logically combined or may be implemented by a plurality of devices, that is, two or more devices which are physically and/or logically separated and are directly and/or indirectly connected (for example, a wired and/or wireless manner).

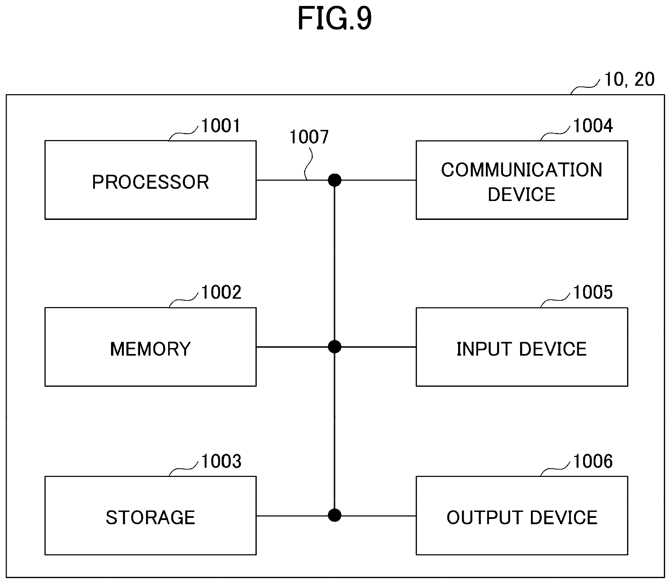

Furthermore, for example, both the user equipment 10 and the base station 20 in one embodiment of the present invention may function as a computer that performs the process according to the embodiments. FIG. 9 is a diagram illustrating an example of a hardware configuration of each of the user equipment 10 and the base station 20 according to the embodiments. Each of the user equipment 10 and the base station 20 may be physically configured as a computer device including a processor 1001, a memory 1002, a storage 1003, a communication device 1004, an input device 1005, an output device 1006, a bus 1007, and the like.

In the following description, the term "device" may be replaced with a circuit, device, unit, or the like. The hardware configuration of each of the user equipment 10 and the base station 20 may be configured to include one or more devices indicated by 1001 to 1006 illustrated in the figure or may be configured without including some devices.

Each function in each of the user equipment 10 and the base station 20 is implemented such that predetermined software (program) is read on hardware such as the processor 1001 and the memory 1002, and the processor 1001 performs an operation and controls communication by the communication device 1004 and reading and/or writing of data in the memory 1002 and the storage 1003.

For example, the processor 1001 operates an operating system and controls the entire computer. The processor 1001 may be configured with a central processing unit (CPU: Central Processing Unit) including an interface with a peripheral device, a control device, an operation device, a register, and the like.

Furthermore, the processor 1001 reads a program (program code), a software module, or data from the storage 1003 and/or the communication device 1004 out to the memory 1002, and executes various types of processes according to them. A program causing a computer to execute at least some of the operations described in the embodiments is used as the program. For example, the transmission unit 110, the reception unit 120, and the control unit 130 of the user equipment 10 illustrated in FIG. 7 may be implemented by a control program which is stored in the memory 1002 and operates on the processor 1001. The transmission unit 210, the reception unit 220, and the control unit 230 of the base station 20 illustrated in FIG. 8 may be implemented by a control program which is stored in the memory 1002 and operates on the processor 1001. Various types of processes are described to be performed by one processor 1001 but may be performed simultaneously or sequentially by two or more processors 1001. The processor 1001 may be implemented by one or more chips. The program may be transmitted from a network via an electric communication line.

The memory 1002 is a computer readable recording medium and configured with at least one of a read only memory (ROM), an erasable programmable ROM (EPROM), an electrically erasable programmable ROM (EEPROM), a random access memory (RAM), and the like. The memory 1002 is also referred to as a "register," a "cache," a "main memory," or the like. The memory 1002 can store programs (program codes), software modules, or the like which are executable for carrying out the radio communication method according to an embodiment of the present invention.

The storage 1003 is a computer-readable recording medium and may be configured with, for example, at least one of an optical disk, such as a compact disc ROM (CD-ROM), a hard disk drive, a flexible disk, a magneto-optical disk (for example, a compact disk, a digital versatile disk, or a Bluray (registered trademark) disc, a smart card, a flash memory (for example, a card, a stick, or a key drive), a floppy (registered trademark) disk, a magnetic strip, and the like. The storage 1003 is also referred to as an "auxiliary storage device." The storage medium may be, for example, a database, a server, or any other appropriate medium including the memory 1002 and/or the storage 1003.

The communication device 1004 is hardware (a transmitting and receiving device) for performing communication between computers via a wired and/or wireless network and is also referred to as a "network device," a "network controller," a "network card," a "communication module," or the like. For example, the transmission unit 110 and the reception unit 120 of the user equipment 10 may be implemented by the communication device 1004. Furthermore, the transmission unit 210 and the reception unit 220 of the base station 20 may be implemented by the communication device 1004.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the memory 1002 are connected via the bus 1007 to communicate information with each other. The bus 1007 may be configured with a single bus or may be configured with different buses between the devices.

Furthermore, each of the user equipment 10 and the base station 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by the hardware. For example, the processor 1001 may be implemented by at least one of these pieces of hardware.

### (Conclusion of the embodiments)

In this specification, at least the following user equipment and communication method are disclosed.

A user equipment including a transmission unit that transmits a signal for indicating that, if a traveling speed of a user equipment is approximately 500 km/h, a channel estimation function supporting a radio propagation environment of a High Speed Train (HST)-Single Frequency Network (SFN) is applicable; a reception unit that receives a signal for enabling the channel estimation function; and a control unit that, in response to receiving the signal for enabling the channel estimation function, enables the channel estimation function.

According to the above-described configuration, even if the traveling speed of the user equipment is approximately 500 km/h, the advanced channel estimation function in the HST-SFN scenario can be applied in the user equipment.

The signal for enabling the channel estimation function may be a Radio Resource Control (RRC) layer signal.

If a value of a flag included in the RRC layer signal indicating to enable the channel estimation function is set to true, the control unit may enable the channel estimation function.

The RRC layer signal may be applied to a primary secondary cell (PSCell) for dual connectivity (DC).

A communication method by a user equipment, the method including transmitting a signal for indicating that, if a traveling speed of a user equipment is about 500 km/h, a channel estimation function supporting a radio propagation environment of a High Speed Train (HST)-Single Frequency Network (SFN) is applicable; receiving a signal for enabling the channel estimation function; and, in response to receiving the signal for enabling the channel estimation function, enabling the channel estimation function.

A user equipment including a reception unit that receives a signal for enabling a receive processing function supporting a radio propagation environment of a High Speed Train (HST)-Single Frequency Network (SFN); and a control unit that enables the receive processing function in response to receiving the signal for enabling the receive processing function supporting the radio propagation environment of the HST-SFN.

The signal for enabling the receive processing function may be a Radio Resource Control (RRC) layer signal.

Upon detecting that a value of a flag included in the RRC layer signal indicating that the receive processing function is to be enabled is set to true, the control unit may enable the receive processing function.

The RRC layer signal may be applied to a primary secondary cell (PSCell) for dual connectivity (DC).

A communication method executed by a user equipment, the method including receiving a signal for enabling a receive processing function supporting a radio propagation environment of a High Speed Train (HST)-Single Frequency Network (SFN); and enabling the receive processing function in response to receiving the signal for enabling the receive processing function supporting the radio propagation environment of the HST-SFN.

### (Supplement of embodiment)

The embodiments of the present invention are described above, but the disclosed invention is not limited to the above-described embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used as necessary, and a matter described in one item may be applied to a matter described in another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the user equipment 10 and the base station 20 are described using the functional block diagrams, but such devices may be implemented by hardware, software, or a combination thereof. Software executed by the processor included in the user equipment 10 according to the embodiment of the present invention and software executed by the processor included in the base station 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

A notification of information is not limited to the aspect or embodiment described in this specification and may be given by any other method. For example, the notification of information may be given physical layer signaling (for example, downlink control information (DCI), uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an "RRC message" and may be, for example, an RRC connection setup message, an RRC connection reconfiguration message, or the like.

Each aspect and embodiment described in this specification is applicable to Long Term Evolution (LTE), LTE-Advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), and systems using any other appropriate systems and/or next generation systems expanded on the basis of the systems.

The processing procedures, the sequences, the flowcharts, and the like of the respective aspects/embodiments described in this specification may be modified in order as long as there is no contradiction. For example, the method described in this specification presents elements of various steps in an exemplary order and is not limited to a presented specific order.

In this specification, a specific action that is supposed to be performed by the base station 20 may be performed by an upper node in some cases. In the network including one or more network nodes including the base station 20, various operations performed for communication with the user equipment 10 can be obviously performed by the base station 20 and/or any network node (for example, an MME, an S-GW, or the like is considered, but it is not limited thereto) other than the base station 20. The example in which the number of network nodes excluding the base station 20 is one has been described above, but a combination of a plurality of other network nodes (for example, an MME and an S-GW) may be provided.

Each aspect/embodiment described in this specification may be used alone, may be used in combination, or may be switched in association with execution.

The user equipment 10 is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms, depending on those having skill in the art.

The base station 20 may also be referred to as a Node B (NB), an enhanced Node B (eNB), a base station, a gNB, or other appropriate terms, by those having skill in the art.

The terms "determine (determining)" and "decide (determining)" used in this specification may include various types of operations. For example, "determining" and "deciding" may include deeming that a result of judging, calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

A phrase "on the basis of" used in this specification is not limited to "on the basis of only" unless otherwise stated. In other words, a phrase "on the basis of" means both "on the basis of only" and "on the basis of at least."

"Include," "including," and variations thereof are intended to be comprehensive, similar to a term "provided with (comprising)" as long as the terms are used in this specification or claims set forth below. Furthermore, the term "or" used in this specification or claims set forth below is intended not to be an exclusive OR.

In the present disclosure, for example, when an article such as "a," "an," or "the" in English is added by a translation, such an article is assumed to include the plural unless it is obviously indicated that such an article does not include the plural.

Although the present invention has been described above in detail, it is obvious to those having skill in the art that the present invention is not limited to the embodiments described in this specification. The present invention can be carried out as revisions and modifications without departing from the gist and scope of the present invention defined by the claims set forth below. Accordingly, the description of this specification is intended to be exemplary and does not have any restrictive meaning to the present invention.

### LIST OF REFERENCE SYMBOLS

- 10: user equipment
- 110: transmission unit
- 120: reception unit
- 130: control unit
- 20: base station
- 210: transmission unit
- 220: reception unit
- 230: control unit
- 1001: processor
- 1002: memory
- 1003: storage
- 1004: communication device
- 1005: input device
- 1006: output device

## Claims

1. A user equipment comprising:
a reception unit that receives a signal for enabling a receive processing function supporting a radio propagation environment of a High Speed Train (HST)-Single Frequency Network (SFN); and
a control unit that enables the receive processing function in response to receiving the signal for enabling the receive processing function supporting the radio propagation environment of the HST-SFN.

2. The user equipment according to claim 1,
wherein the signal for enabling the receive processing function is a Radio Resource Control (RRC) layer signal.

3. The user equipment according to claim 2, wherein, upon detecting that a value of a flag included in the RRC layer signal indicating that the receive processing function is to be enabled is set to true, the control unit enables the receive processing function.

4. The user equipment according to claim 1,
wherein the RRC layer signal is applied to a primary secondary cell (PSCell) for dual connectivity (DC).

5. A communication method executed by a user equipment, the method comprising:
receiving a signal for enabling a receive processing function supporting a radio propagation environment of a High Speed Train (HST)-Single Frequency Network (SFN); and
enabling the receive processing function in response to receiving the signal for enabling the receive processing function supporting the radio propagation environment of the HST-SFN.
